# EUROPÄISCHE PATENTANMELDUNG

(11) **EP 3 933 262 A1**
(43) Veröffentlichungstag der Anmeldung: **05.01.2022**
(21) Anmeldenummer: 21179550.5
(22) Anmeldetag: 15.06.2021
(51) Int. Cl.: F21V 33/00, B23Q 17/24, F21S 8/02, F21W 131/403, F21Y 103/33, F21Y 115/10

(54) **LEUCHTE, INSBESONDERE EINBAU- ODER AUFBAULEUCHTE**

(30) Priorität: 29.06.2020 DE 102020117068
(71) Anmelder: Herbert Waldmann GmbH & Co. KG, 78056 Villingen-Schwenningen (DE)
(72) Erfinder: Eberhardt, Marcus, 78554 Aixheim (DE); Rapp, Jürgen, 78664 Eschbronn (DE)
(74) Vertreter: Westphal, Mussgnug & Partner Patentanwälte mbB

(57) **Zusammenfassung**

Die vorliegende Erfindung betrifft eine Leuchte (1), insbesondere Einbau- oder Aufbauleuchte für die Anordnung an einer Innenwandung (5) in einer Maschine, aufweisend ein Gehäuse (10) mit einem Frontseitenbereich 12 und einem Rückseitenbereich (14), mindestens ein Leuchtmittel (30), mindestens eine Kamera (40), wobei im Frontseitenbereich (12) eine Lichtaustrittsöffnung (35) vorgesehen ist, durch die das von dem mindestens einen Leuchtmittel (30) emittierte Licht austreten kann, und wobei eine Ausnehmung (20) im Frontseitenbereich (12) vorgesehen ist, in die die Kamera (40) einsetzbar ist.

## Beschreibung

Die vorliegende Erfindung betrifft eine Leuchte, insbesondere eine Einbau- oder Aufbauleuchte für die Anordnung an einer Wandung einer Prozesskammer einer Maschine mit einer integrierten Kamera mit den Merkmalen des Patentanspruchs 1.

Einbauleuchten und Aufbauleuchten sind aus dem Stand der Technik in unterschiedlichen Ausgestaltungen vorbekannt, wobei Einbauleuchten für die Anordnung in einer Montageöffnung einer Wandung konfiguriert sind und in diese zumindest teilweise eingesetzt werden können, während dessen Aufbauleuchten für die Montage auf einer Wandung ausgebildet sind und somit von einer Oberfläche dieser Wandung in einen Raum abstehen.

Maschinen, beispielsweise zur spanenden Bearbeitung von Werkstücken oder zur Handhabung von Chemikalien, Lebensmitteln oder sonstigen Produkten, weisen eine Prozesskammer auf, in der ein Prozess durchgeführt wird. Um eine visuelle Beobachtung des Prozesses in der Prozesskammer zu ermöglichen, werden Einbauleuchten oder Aufbauleuchten an der Wandung in der Prozesskammer der Maschine angeordnet, durch die das Werkstück während des Prozesses ausreichend beleuchtet werden kann, damit der Prozess durch eine Sichtscheibe in der Maschine beobachtet werden kann.

Für die Verwendung von Einbau- oder Aufbauleuchten in Prozesskammern einer Maschine müssen die Einbau- oder Aufbauleuchten besonders robust sein, um den Bedingungen in der Prozesskammer standhalten zu können. Sowohl Späne, Prozessstoffe als auch Keime können auf diese Leuchten einwirken. Oftmals behindern Werkzeughalter, Werkstückhalter oder andere Prozessaggregate der Maschine eine freie Sicht auf den Prozess oder Schattenwürfe stören die visuelle Beobachtungsmöglichkeit.

Hier setzt die vorliegende Erfindung an.

Es ist die Aufgabe der vorliegenden Erfindung eine verbesserte Leuchte, insbesondere eine verbesserte Aufbau- oder Einbauleuchte, vorzuschlagen, die in zweckmäßiger Weise die aus dem Stand der Technik bekannten Leuchten verbessert und durch die eine optimale visuelle Beobachtbarkeit des Prozesses in der Prozesskammer gewährleistet werden kann. Die Leuchte soll einen kompakten Aufbau aufweisen, sowie eine bestmögliche Ausleuchtung des Prozesses ermöglichen, wodurch eine visuelle Beobachtung des Prozesses in der Prozesskammer möglich ist. Auch soll die Leuchte derart ausgestaltet sein, dass sich keine Keime und andere Verunreinigungen in unzugänglichen Stellen absetzten können.

Diese Aufgaben werden durch die Leuchte, insbesondere die Einbau- oder Aufbauleuchte mit den Merkmalen des Patentanspruchs 1 gelöst.

Weitere vorteilhafte Ausgestaltungen der erfindungsgemäßen Leuchte werden in den Unteransprüchen angegeben.

Die erfindungsgemäße Leuchte, insbesondere die erfindungsgemäße Einbau- oder Aufbauleuchte für die Anordnung an einer Innenwandung einer Maschine, mit den Merkmalen des Patentanspruchs 1, weist ein Gehäuse mit einem Frontseitenbereich und einem Rückseitenbereich, mindestens ein Leuchtmittel und mindestens eine Kamera auf, wobei im Frontseitenbereich eine panelenförmige Lichtaustrittsöffnung vorgesehen ist, durch die das von dem mindestens einen Leuchtmittel emittierte Licht austreten kann und wobei eine Ausnehmung im Frontseitenbereich vorgesehen ist, in die die Kamera einsetzbar ist. Das Gehäuse der erfindungsgemäßen Leuchte ist bevorzugt im Wesentlichen quaderförmig, wobei eine Tiefe des Gehäuses den Abstand zwischen dem Frontseitenbereich und dem Rückseitenbereich beschreibt und die Breite und Länge Maße einer Fläche, die der Prozesskammer zugewandt sind. Die Tiefe des Gehäuses ist im Verhältnis zu der Breite und der Länge um ein Vielfaches kleiner.

Hier und im Nachfolgenden wird unter einer panelenförmigen Ausgestaltung eine näherungsweise plattenförmige bzw. ebene Ausgestaltung verstanden, welche zwar eine Konturierung aufweisen kann, jedoch in einer Ebene angeordnet ist. Durch die panelenförmige Ausgestaltung der Lichtaustrittsöffnung kann das von dem mindestens einen Leuchtmittel emittierte Licht flächig abgestrahlt werden, wodurch Schattenwürfe reduziert werden.

Das mindestens eine Leuchtmittel kann ein LED-Leuchtmittel sein, wobei bevorzugt eine Mehrzahl von Leuchtmitteln in dem Gehäuse vorgesehen sind, die bevorzugt auf einer gemeinsamen Ebene verteilt - insbesondere äquidistant - angeordnet sind.

Eine bevorzugte Weiterbildung der vorliegenden Erfindung sieht vor, dass die Ausnehmung das Gehäuse durchbricht. Die Ausnehmung kann als Stufenbohrung ausgebildet sein und kann als Durchgangsöffnung oder Durchbrechung den Frontseitenbereich mit dem Rückseitenbereich verbinden. Die Ausnehmung kann beabstandet zu den Seitenflächen des Gehäuses angeordnet sein. Die in die Ausnehmung eingesetzte Kamera ist somit sowohl von dem Rückseitenbereich als auch von dem Frontseitenbereich zugänglich. Zur Bildung der Ausnehmung kann das Gehäuse einen Gehäusering aufweisen, der das Gehäuse auf der der Ausnehmung zugewandten Seite dicht verschließt.

Darüber hinaus hat es sich als vorteilhaft erwiesen, wenn die Kamera in der Ausnehmung um einen Drehpunkt verschwenkbar ist. Die Kamera kann folglich in der Ausnehmung nach Art eines Kugelgelenkes gehalten sein, womit die Kamera in einen beliebigen Raumwinkel ausgerichtet werden kann. Gemäß einer bevorzugten Ausgestaltung kann die Kamera um den Drehpunkt in einem beliebigen Raumwinkel von ±45°, vorzugsweise ±40°, noch weiter bevorzugt ±35° und noch weiter bevorzugt ±30° verschwenkt werden, wodurch durch die Kamera ein besonders großes Beobachtungsfeld, insbesondere in der Prozesskammer der Maschine, erfasst werden kann.

Nach Maßgabe einer Weiterbildung der vorliegenden Erfindung ist es bevorzugt, wenn in der Lichtaustrittsöffnung mindestens eine lichtdurchlässige Platte angeordnet ist, und dass die Ausnehmung die mindestens eine lichtdurchlässige Platte durchbricht. Die mindestens eine lichtdurchlässige Platte kann das Gehäuse in dem Frontseitenbereich bevorzugt gas- und/oder flüssigkeitsdicht verschließen und kann darüber hinaus aus Kunststoff, Glas, Glaskeramik oder aus einer Kombination der vorgenannten Werkstoffe hergestellt sein.

Gemäß einer weiteren vorteilhaften Ausgestaltung der vorliegenden Erfindung ist es vorgesehen, dass um die Ausnehmung herum das mindestens eine Leuchtmittel angeordnet ist. Insbesondere ist es bevorzugt, wenn eine Vielzahl von Leuchtmitteln, insbesondere LED-Leuchtmittel, vorgesehen sind, die um die Ausnehmung herum angeordnet sind. Dadurch, dass das mindestens eine Leuchtmittel um die Ausnehmung herum angeordnet ist, ist die optische Sichtachse der Kamera von einem "Lichtmantel" umgeben, wodurch das beobachtete Objekt oder der beobachtete Gegenstand besonders gut ausgeleuchtet werden kann.

Weiterhin hat es sich als vorteilhaft erwiesen, wenn in der Ausnehmung ein Lagerabschnitt ausgebildet ist, der eine - bevorzugt kreisrunde - Klemmkante aufweist oder ausgehend von dem Frontseitenbereich zu dem Rückseitenbereich verjüngend ausgebildet ist. Der Lagerabschnitt ist konfiguriert, die Kamera schwenkbar in der Ausnehmung abzustützen. Der Lagerabschnitt kann bevorzugt hohlkugelförmig oder kegelförmig ausgebildet sein, wobei ein hohlkugelförmiger Lagerabschnitt einen bevorzugten flächigen Kontakt mit der mindestens einen Kamera bzw. dessen Gehäuse bewerkstelligen kann. Allerdings genügt es auch, wenn der Lagerabschnitt drei Punktauflagen zum Abstützen der Kamera aufweist. Die Ausnehmung ist bevorzugt im Lagerabschnitt kreisförmig ausgebildet.

Darüber hinaus es bevorzugt, wenn die Ausnehmung auf der dem Frontseitenbereich zugewandten Seite eine Aufweitung aufweist. Die Aufweitung ist bevorzugt zylinderförmig ausgebildet und ist über eine Kegelfläche mit dem Lagerabschnitt verbunden, wobei sowohl die Kegelfläche als auch die Aufweitung einen Durchmesser aufweisen, der größer ist als der kleinste Durchmesser des Lagerabschnitts. Insbesondere ist es bevorzugt, wenn der kleinste Durchmesser der Kegelfläche als auch der Durchmesser der Aufweitung größer bemessen ist, als ein Durchmesser der Kamera bzw. eine Einhausung der Kamera.

Eine weitere bevorzugte Ausgestaltung der vorliegenden Erfindung sieht vor, dass ein Fixiermittel vorgesehen ist, das in die Ausnehmung einsetzbar ist und ein entsprechendes Gegenlager aufweist. Die mindestens eine Kamera wird durch einen Formschluss zwischen dem Lagerabschnitt in der Ausnehmung und dem Fixiermittel in der Ausnehmung gehalten. Das Gegenlager ist bevorzugt aus einem kegelförmigen Endabschnitt ausgebildet, der sich in Richtung des Frontseitenbereichs verjüngt.

Eine weitere bevorzugte Ausgestaltung sieht vor, dass das Fixiermittel in die Ausnehmung einsetzbar ist. Bevorzugt ist das Fixiermittel in die Ausnehmung einschraubbar, oder alternativ kann in einer bevorzugten Ausgestaltung das Fixiermittel durch einen Rastverschluss in der Ausnehmung befestigbar sein. Insbesondere ist es bevorzugt, wenn das Fixiermittel in die Aufweitung der Ausnehmung einschraubbar oder einrastbar ist, wobei die Aufweitung bzw. die Ausnehmung hierzu entsprechende korrespondierende Mittel aufweist.

Gemäß einer vorteilhaften Weiterbildung der vorliegenden Erfindung kann das Fixiermittel in dem Frontseitenbereich mindestens eine Bedienkomforte - wie beispielsweise eine Griff- oder Werkzeugmulde - aufweisen. Bevorzugt weist das Fixiermittel über den Umfang verteilt, insbesondere symmetrisch über den Umfang verteilt, mehrere Bedienkomforten wie Griff- oder Werkzeugmulden auf. Die mindestens eine Bedienkomforte ermöglicht ein manuelles oder werkzeugunterstütztes Drehen des Fixiermittels, insbesondere um die Kamera in dem Formschluss zwischen dem Fixiermittel und dem Lagerabschnitt festzulegen oder freizugeben.

Darüber hinaus hat es sich als vorteilhaft erwiesen, wenn ein Klemm- und/oder Dichtmittel vorgesehen ist, durch welches die Kamera in der Ausnehmung verklemmt werden kann und/oder ein Spalt zwischen dem Gehäuse und der Kamera abgedichtet werden kann. Das Klemm- und/oder Dichtmittel ist insbesondere ein elastisch und/oder plastisch verformbarer Körper, der bevorzugt über die Kegelfläche beim Einsetzen des Spannmittels gegen die Kamera bzw. deren Einhausung gepresst wird. Das Klemmmittel kann beispielsweise ein Gummiring bzw. Dichtring sein, wodurch ebenfalls die Ausnehmung gegenüber der Kamera abgedichtet wird.

Eine bevorzugte Ausgestaltung der vorliegenden Erfindung sieht vor, dass die Kamera abschnittsweise kugelförmig ausgebildet ist. Insbesondere ist es bevorzugt, wenn die Kamera kugelförmig ausgebildet ist und mindestens eine Abflachung aufweist. Die Abflachung entspricht einer kreisförmigen Sekantialfläche, wobei vorzugsweise auf zwei diametralen Seiten jeweils eine Abflachung vorgesehen ist. Die mindestens eine kreisförmige Abflachung bildet eine Vorderseite der Kamera mit mindestens einer optischen Öffnung. Bevorzugt ist auf der gegenüberliegenden Seite eine zweite Abflachung vorgesehen, die die Rückseite der Kamera bildet und beispielsweise elektrische Anschlüsse für die Energie- und/oder Datenübertragung aufweist.

Der kugelförmig ausgebildete Abschnitt der Kamera weist vorzugsweise einen konstanten Durchmesser auf, wobei der kugelförmig ausgebildete Abschnitt ausgehend von der mindestens einen kreisförmigen Abflachung auf der Frontseite ein Bogenmaß α von mindestens 30°, bevorzugt mindestens 45°, weiter bevorzugt mindestens 60° und besonders bevorzugt von mindestens 90° überstreckt. Das Bogenmaß sollte jedoch 135° nicht überschreiten, um eine Baugröße der Kamera klein zu halten.

Eine weitere vorteilhafte Ausgestaltung der vorliegenden Erfindung sieht vor, dass die Vorderseite der Kamera eine lichtdurchlässige Blende aufweist. Die lichtdurchlässige Blende ist bevorzugt in Form einer kreisrunden Scheibe ausgebildet und kann aus einem Kunststoff, Glas, Glaskeramik oder einer Kombination dieser Werkstoffe hergestellt sein.

Es hat sich als vorteilhaft erwiesen, wenn die lichtdurchlässige Blende eine angetriebene Schleuderscheibe ist. Die Blende kann in eine schnelle Rotation versetzt werden, wodurch Verunreinigungen wie Späne, Kühlmittel o. Ä. durch die Fliehkraft weggeschleudert werden und das Sichtfeld der Kamera nicht weiter beeinträchtigen.

Eine weitere vorteilhafte Ausgestaltung der vorliegenden Erfindung sieht vor, dass Mittel zur Erzeugung einer Sperrluft vorgesehen sind, die konfiguriert sind, einen Laufspalt der lichtdurchlässigen Blende mit der Sperrluft zu durchspülen. Durch die Sperrluft wird verhindert, dass durch den Laufspalt Verunreinigungen wie Späne, Kühlmittel o. Ä. in die Kamera eindringen können. Ergänzend oder alternativ können in dem Laufspalt Dichtungen vorgesehen sein.

Auch hat es sich als vorteilhaft erwiesen, wenn das mindestens eine Leuchtmittel in der Kamera benachbart zu dem mindestens einen Bildsensor angeordnet ist. Das mindestens eine Leuchtmittel der Leuchte, insbesondere der Einbau- oder Aufbauleuchten, kann somit zusammen mit der Kamera in der Ausnehmung verschwenkt werden, wobei bevorzugt sowohl in dem Gehäuse um die Ausnehmung als auch in der Kamera Leuchtmittel angeordnet sein können.

Darüber hinaus ist es vorteilhaft, wenn die Kamera mindestens zwei Bildsensoren aufweist, die, insbesondere um die Drehachse der Schleuderscheibe, zueinander beabstandet angeordnet sind. Die mindestens zwei Bildsensoren ermöglichen eine stereographische Beobachtung des Prozesses in der Prozesskammer.

Nachfolgend wird unter Bezugnahme auf die begleitende Figur ein erfindungsgemäßes Ausführungsbeispiel der Leuchte im Detail beschrieben. Es zeigen:
- Figur 1: eine vereinfachte perspektivische Darstellung der erfindungsgemäßen Leuchte, welche als Einbauleuchte mit integrierter Kamera ausgebildet ist,
- Figur 2: eine Seitenansicht der Leuchte gemäß Figur 1,
- Figur 3: eine Explosionsdarstellung der Leuchte gemäß den Figuren 1-2, und
- Figur 4: eine Schnittdarstellung der Leuchte gemäß den Figuren 1-3, wobei die Kamera um einen Drehpunkt verschwenkt ist.

Nachfolgend werden gleiche oder funktional gleiche Bauteile mit gleichen Bezugszeichen gekennzeichnet. Der Übersichtlichkeit halber sind in den einzelnen Figuren nicht alle gleichen oder funktional gleichen Teile mit einer Bezugsziffer versehen.

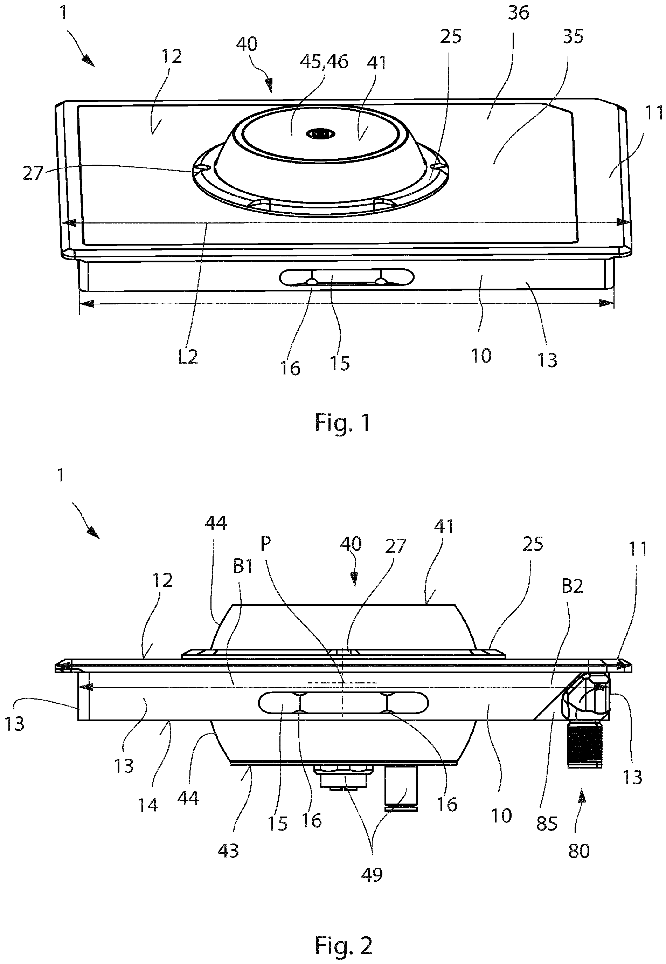

In Figur 1 ist eine Leuchte 1 mit einer integrierten Kamera 40 dargestellt, wobei die Leuchte 1 als Einbauleuchte ausgebildet ist um in einer (nicht dargestellte) Montageöffnung, insbesondere eine Montageöffnung einer Innenwandung einer Prozesskammer einer Maschine, angeordnet zu werden.

Die Leuchte 1 weist ein Gehäuse 10 mit einem Frontseitenbereich 12 und einem Rückseitenbereich 14 auf, wobei der Rückseitenbereich 14 in die (nicht dargestellte) Montageöffnung ragen kann. Der Rückseitenbereich 14 weist eine Rückseite und der Frontseitenbereich 12 eine Frontseite auf.

Das Gehäuse 10 ist vorzugsweise quaderförmig und kann wie dargestellt vier Seitenwände 13 aufweisen, wobei das Gehäuse 10 eine Breite B1, eine Länge L1 und eine Höhe H1 aufweist. An dem Frontseitenbereich 12 weist das Gehäuse 10 einen - bevorzugt umlaufenden - Flansch 11 auf, der von den Seitenwänden 13 absteht und einen Anschlag bildet, durch den eine Montageposition in der Wandung vorgegeben ist.

Wie der Figur 1 weiter zu entnehmen ist, weist die Einbauleuchte 1 im Frontseitenbereich 12 mit dem Anschlag 11 gemessen eine Breite B2 und eine Länge L2 auf, wobei die Breite B2 größer ist als die Breite B1 und die Länge L2 größer ist als die Länge L1.

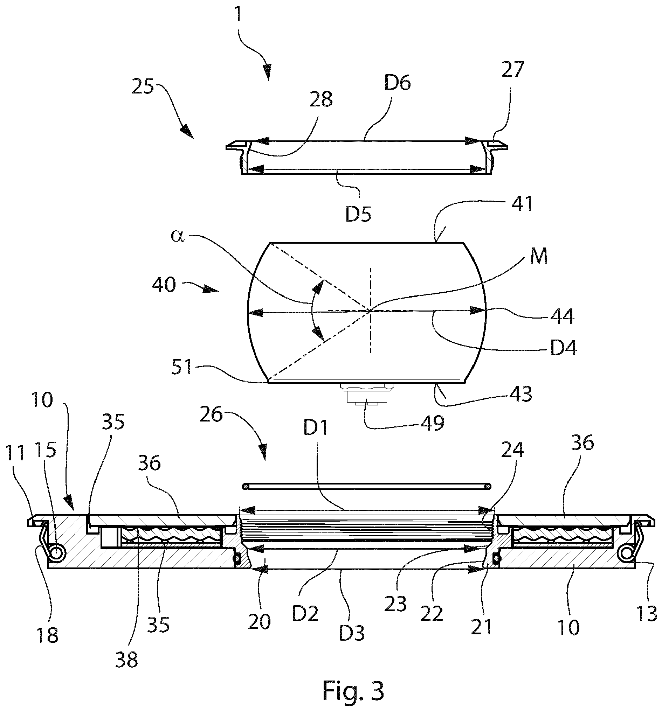

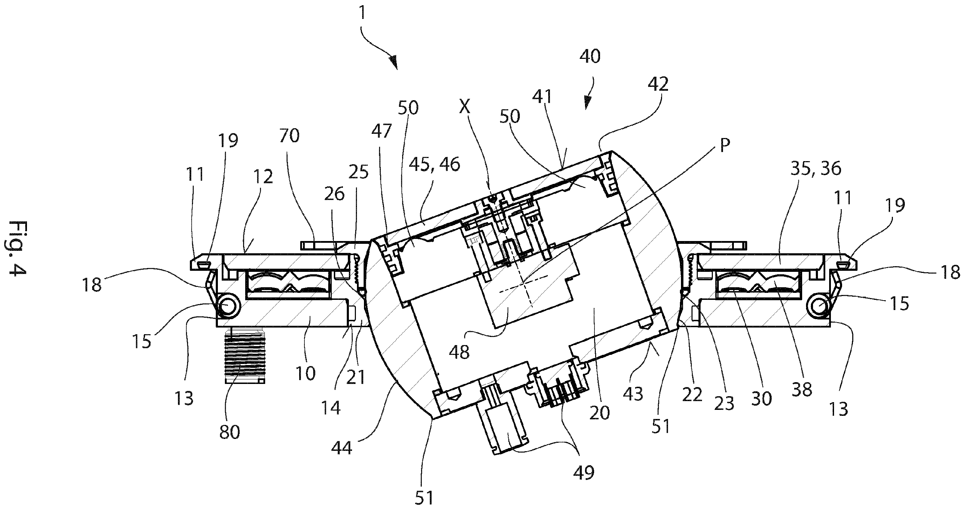

Die Figuren 3 und 4 zeigen, dass in dem Gehäuse 10 ein oder mehrere Leuchtmittel 30 angeordnet sein können, wobei bevorzugt die Leuchtmittel 30 LED-Leuchtmittel sind, die auf einem oder mehreren Trägern bevorzugt in einer gemeinsamen Ebene und in einem Raster angeordnet sind. Ferner weist das Gehäuse 10 in dem Frontseitenbereich 12 eine paneelenartige Lichtaustrittsöffnung 35 auf, durch die das von den Leuchtmitteln 30 emittierte Licht abgestrahlt werden kann. Die Gehäuseöffnung 35 kann durch eine lichtdurchlässige Platte 36 in Form einer Paneele in dem Frontseitenbereich 12 gas- und/oder flüssigkeitsdicht verschlossen sein.

Das Gehäuse 10 weist ferner eine Ausnehmung 20 auf, die das Gehäuse 10 durchbricht und die den Frontseitenbereich 12 mit dem Rückseitenbereich 14 verbindet. Die Ausnehmung 20 kann beliebig positioniert sein, wobei bevorzugt die Ausnehmung 20 im Flächenmittelpunkt der Lichtaustrittsöffnung 35 angeordnet sein kann. Die Ausnehmung 20 kann durch einen Gehäusering 21 umgeben sein, wobei der Gehäusering 21 zusammen mit dem Gehäuse und der lichtdurchlässig Platte 36 die Leuchtmittel 30 bevorzugt gas- und/oder flüssigkeitsdicht umschließt.

Die Ausnehmung 20 weist in dem Frontseitenbereich 12 eine Aufweitung 24 auf, die in dem dargestellten Ausführungsbeispiel mit einem Außengewinde versehen ist und einen Durchmesser D1 aufweist. Alternativ kann beispielsweise die Aufweitung 24 ebenfalls Mittel zum Herstellen einer Bajonettverbindung oder dergleichen aufweisen.

Ferner weist die Ausnehmung 20 im Rückseitenbereich 14 einen Lagerabschnitt 22 auf, der eine Klemmkante aufweist, auf der die Kamera abgestützt werden kann. Der Lagerabschnitt 22 weist an der engsten Stelle einen Durchmesser D5 aufweist. Zwischen dem Lagerabschnitt 22 und der Aufweitung 24 ist ein Kegelabschnitt 23 ausgebildet, wobei der Kegelabschnitt 23 eine in Richtung des Rückseitenbereichs 14 zulaufende Form aufweist, wobei der kleinste Durchmesser D3 des Kegelabschnitts 23 ist.

Die Kamera 40 weist eine kugelförmige Einhausung auf, die gemäß den Figuren 3 und 4 durch einen Kugelabschnitt 44 gebildet sein kann. Der Kugelabschnitt 44 kann symmetrisch um einen Mittelpunkt M, der der geometrischen Mitte des Kugelabschnitts 44 entspricht, ausgebildet sein, wobei der Kugelabschnitt 44 einen Durchmesser D4 aufweist. Auf zwei diametralen Seiten der Kamera 40 ist jeweils eine Abflachung 42 vorgesehen, wobei die eine Abflachung 42 die eine Vorderseite 41 der Kamera 40 bildet und die gegenüberliegende Abflachung 42 die Rückseite 43 der Kamera 40. Die jeweilige Abflachung 42 kann als Sekantialfläche gebildet sein, also eine Fläche, die auf einer Ebene angeordnet ist, die auf einer Sekante liegt.

Wie in Figur 3 eingezeichnet ist, erstreckt sich der Kugelabschnitt 44 über ein Bogenmaß α, wobei das Bogenmaß α in dieser bevorzugten Ausführung ca. α = 40° betragen kann. Während auf der Vorderseite 41 der Kugelabschnitt 44 unmittelbar in die Abflachung 42 übergeht, ist zwischen der die Rückseite bildenden Abflachung 42 und dem Kugelabschnitt 44 ein Endanschlag 51 ausgebildet, der über den den Kugelabschnitt 44 bildenden Radius R hinausragt, wobei gilt: R = D4/2.

Auf der Vorderseite 41 der Kamera 40 ist eine lichtdurchlässige Blende 45 vorgesehen, durch die hindurch eine oder mehrere in der Kamera 40 angeordnete Bildsensoren 50 blicken können und das Geschehen im Innenraum bzw. in der Prozesskammer einer Maschine erfassen können.

Die lichtdurchlässige Blende 45 kann als Schleuderscheibe 46 mit einer Antriebseinheit 48 ausgebildet sein, durch die die Blende 45 mit einer hohen Drehzahl um eine Drehachse X rotieren kann und sämtliche Verunreinigungen weggeschleudert, damit der mindestens eine dahinter angeordnete Bildsensor 50 ungehindert das Geschehen beobachten kann.

Wie insbesondere der Schnittdarstellung in Figur 4 zu entnehmen ist, kann die Kamera 40 zwei Bildsensoren 50 aufweisen, die vorzugsweise auf gegenüberliegenden Seiten der Drehachse X angeordnet sein können. Zwischen den Bildsensoren 50 kann um die Drehachse X verteilt ein oder mehrere Leuchtmittel 30 angeordnet sein, wobei die Leuchtmittel 30 konfiguriert sein können, Licht in einer Hauptabstrahlrichtung parallel zu der optischen Achse der Bildsensoren 50 zu emittieren.

Auf der Rückseite 43 der Kamera 40 können Anschlüsse 49 vorgesehen sein, die zur Datenübertragung und/oder zur Energieversorgung verwendet werden können.

Die Kamera 40 kann in die Ausnehmung 20 eingesetzt werden, und an dem Lagerabschnitt 22 abgestützt anliegen. Hierzu sind der Durchmesser D1 größer als der Durchmesser D4 des Kugelabschnitts 44 der Kamera 40, der Durchmesser D5 des Lagerabschnittes 22 kleiner als der Durchmesser D4 des Kugelabschnitts 44 und der Durchmesser D3 kleiner als der Durchmesser D4 des Kugelabschnitts 44 der Kamera 40. Die Kamera 40 wird in dem Lagerabschnitt 22 derart gehalten, dass der Drehpunkt P innerhalb der Ausnehmung 20 im Gehäuse 10, vorzugsweise im Bereich der Aufweitung 24, angeordnet ist.

Die Kamera 40 kann in die Ausnehmung 20 eingesetzt werden und liegt mit dem Kugelabschnitt 44 gleitgelagert auf dem Lagerabschnitt 22 auf. Die Kamera 40 kann um den Drehpunkt P bevorzugt um ±20° in eine beliebige Raumrichtung verschwenkt werden, wobei ein maximaler Schwenkwinkel von dem Zusammenwirken des Endanschlages 51 und dem Gehäusering 21 vorgegeben wird. Wie in Figur 4 dargestellt ist, hintergreift der Endanschlag 51 das Gehäuse 10 und verhindert ein Verschwenken über den maximalen Schwenkwinkel hinaus.

Um die Kamera 40 in der Ausnehmung 20 verlustsicher zu halten, ist ein Fixiermittel 25 vorgesehen, welches mit dem Gehäuse 10 verbunden werden kann und die Kamera 40 in der Ausnehmung 20 formschlüssig hält. Das Fixiermittel 25 in dem dargestellten Ausführungsbeispiel kann ein hohlzylindrischer bzw. ringförmiger oder hülsenförmiger Körper mit einer inneren Mantelfläche sein, der entsprechende Mittel - vorliegend ein Außengewinde auf einer äußeren Mantelfläche - aufweist, um in der Aufweitung 24 der Ausnehmung 20 befestigt zu werden. Die innere Mantelfläche weist einen Durchmesser D5 auf.

Das Fixiermittel 25 weist weiterhin ein Gegenlager 28 auf, wobei das Gegenlager 28 durch eine vorspringende Verjüngung mit einer weiteren Klemmkante gebildet ist mit einem Durchmesser D6, welche im eingesetzten Zustand des Fixiermittels 25 in dem Frontseitenbereich 12 des Gehäuses 10 angeordnet ist, und die Kamera 40 über den Kugelabschnitt 44 gegen den Lagerabschnitt 22 verklemmen kann.

Der Durchmesser D5 der inneren Mantelfläche ist bevorzugt größer oder gleich D4 und der kleinste Durchmesser D6 des Gegenlagers 28 kleiner als D4. Folglich gilt: D5 ≥ D4 und D6 < D4.

Weiterhin kann in die Ausnehmung 20 ein Klemm- und/oder Dichtmittel 26 eingesetzt werden, welches in dem Kegelabschnitt 23 angeordnet sein kann. Das Klemm- und/oder Dichtmittel 26 wird durch das Fixiermittel 25 in den Kegelabschnitt 23 gezwängt, wodurch einerseits ein Ringspalt zwischen dem Gehäuse 10 und der Kamera 40 abgedichtet bzw. verschlossen wird und andererseits eine Klemmkraft auf die Kamera 40 ausgeübt wird, durch welche diese in der Schwenkposition gehalten wird. Durch die Klemmkraft kann verhindert werden, dass die Kamera aufgrund von Vibrationen oder Fremdeinwirkungen ungewünscht verschwenkt wird.

Um das Fixiermittel 25 in die Ausnehmung 20 einzusetzen und um möglicherweise das Klemm- und/oder Dichtmittel 26 in den Kegelabschnitt 23 zu zwängen, kann das Fixiermittel 25 auf der von dem Gegenlager 28 abgewandten Seite Werkzeug- und/oder Griffmulden 27 aufweisen, in die ein Werkzeug 70 - siehe Figur 4 - eingesetzt werden kann, um die Montage der Leuchte 1 zu erleichtern.

Um die Einbauleuchte 1 bzw. die Einbauleuchte und/oder -kamera 1 in der Montageöffnung der Wandung zu befestigen, können mehrere Schenkelfedern 18 vorgesehen sein, die aus den Seitenwänden 13 ragen. In einer bevorzugten Ausgestaltung sind mindestens zwei Schenkelfedern 18 auf gegenüberliegenden Seitenwänden 13, wie in den Figuren 3 und 4 dargestellt ist, angeordnet.

Die jeweilige Schenkelfeder 18 ist auf der jeweiligen Seitenwand 13 in eine Ausnehmung 15 eingesetzt, und ragt aus der Ausnehmung 15 über die jeweilige Seitenwand 13.

Die Ausnehmung 15 kann als halbrunde Nut, beispielsweise durch eine Hohlkehlfräsung oder eine Tellerfräsung, in der Seitenwand 13 des Gehäuses 10 eingearbeitet oder eingeformt sein und kann weiterhin in einer Längsrichtung auslaufen. Die halbrunde Nut weist einen Durchmesser auf, wobei die Tiefe der halbrunden Nut vorzugsweise größer als die Hälfte des Durchmessers und kleiner als der Durchmesser ist.

In der Aussparung 15 können Hinterschneidungen 16 ausgebildet sein, die bevorzugt dem Frontseitenbereich 12 und/oder dem Rückseitenbereich 14 zugewandt sind. Die jeweilige Hinterschneidung 16 kann, wie den Figuren 1 und 2 entnommen werden kann, durch eine Ausnehmung gebildet werden, die von dem Rückseitenbereich 14 bzw. der Rückseite in das Gehäuse 10 eingearbeitet oder eingeformt ist und die Rückseite mit der Aussparung 15 und diese beidseitig zur Bildung von gegenüberliegenden Hinterschneidungen 16 durchdringt.

Die Schenkelfeder 18 ragt aus der Aussparung 15 über die jeweilige Seitenwand 13 V- oder U-förmig mit zwei Flanken, die sich in einer Kuppe treffen. Durch zwei Flanken kann die Schenkelfeder 18 nach Art einer Türfalle beim Einsetzen der Einbauleuchte 1 eine elastische Ausweichbewegung vornehmen. Dabei wird über eine erste Flanke der Schenkelfeder 18 elastisch in Richtung der jeweiligen Seitenwand 13 gedrückt. Sobald die Kuppe die Montageöffnung der Wandung passiert hat, federt bzw. rastet die Schenkelfeder 18 zurück und presst die zweite Flanke gegen die Wandung in einen federgespannten Formschluss wodurch die Wandung zwischen dem Anschlag 11 und der Schenkelfeder eingeklemmt wird.

Die Schenkelfeder 18 kann zwei Schenkelfederabschnitte und einen Bügelabschnitt aufweisen, wobei die zwei Schenkelfederabschnitte beabstandet zueinander angeordnet sind und über den Bügelabschnitt miteinander verbunden sein können. Der Bügelabschnitt ist im Wesentlichen in der Längsrichtung ausgerichtet.

Der Schenkelfederabschnitt weist einen ersten Schenkel und einen zweiten Schenkel auf, wobei zwischen dem ersten Schenkel und dem zweiten Schenkel ein Schraubenfederabschnitt angeordnet sein kann, der eine Wicklungsrichtung aufweist. Der erste Schenkel bildet ein freies Ende, während dessen der zweite Schenkel mit dem Bügelabschnitt verbunden ist.

Der Schraubenfederabschnitt des Schenkelfederabschnitts weist einen Durchmesser auf, wobei der Durchmesser in etwa dem Durchmesser der halbrunden Nut bzw. Aussparung 15 entspricht.

Der erste Schenkel steht von dem Schraubenfederabschnitt ab und greift in die Hinterschneidung 16 in der Aussparung 15.

Der zweite Schenkel ragt aus der Aussparung 15 über die jeweilige Seitenwand 13 V-förmig, und bildet die erste Flanke, die zweite Flanke und die Kuppe der Schenkelfeder aus. Der zweite Schenkel ragt geneigt aus der Aussparung 15 und überragt derart die jeweilige Seitenwand 13, dass die Kuppe in Richtung des Frontseitenbereichs 12 jenseits der Aussparung 15 und beabstandet zu der Seitenwand 13 angeordnet ist. Der Bügelabschnitt wird durch die elastische Federkraft in der Wickelrichtung gegen die jeweilige Seitenwand 13 gedrückt.

Der Bügelabschnitt ist abgewinkelt zu dem zweiten Schenkel angeordnet und liegt an der jeweiligen Seitenwand 13 an. Darüber hinaus kann der Bügelabschnitt an dem Anschlag 11 bzw. dem Flansch anliegen, wobei bevorzugt in den Flansch auf der dem Rückseitenbereich 14 zugewandten Seite eine an den Bügelabschnitt der Schenkelfeder 18 angepasste Ausnehmung eingearbeitet oder eingeformt ist, die den Bügelabschnitt aufnimmt. Der Bügelabschnitt kann durch die Federkraft der Schenkelfeder 18 gegen den Anschlag 11 gedrückt werden.

Durch den Formschluss des ersten Schenkels in der Hinterschneidung 16 und/oder den Formschluss des Bügelabschnitts in der Ausnehmung kann die Schenkelfeder 18 in die Aussparung 15 eingeklipst werden und ist dort verlustsicher gehalten.

Unter Bezugnahme auf Figur 4 ist ersichtlich, dass die Einbauleuchte 1 und/oder -kamera einen elektrischen Anschluss 80 aufweist, wobei der elektrische Anschluss auf einer um 45° zu der Rückseite geneigten Fläche 85 an einer Kante zwischen zwei Seitenwänden 13 angeordnet ist. Der elektrische Anschluss 80 ist an der geneigten Fläche 85 drehbeweglich angeordnet, wobei der elektrische Anschluss 80 vorzugsweise um 180° an der geneigten Fläche 85 verdrehbar ist.

Der elektrische Anschluss kann ein oder mehrpolig sein und dient einerseits der Bestromung der Einbauleuchte und/oder - kamera 1 und/oder einem Datenaustausch.

### Bezugszeichenliste

- 1: Leuchte
- 5: Innenwandung
- 10: Gehäuse
- 11: Flansch
- 11: Anschlag
- 12: Frontseitenbereich
- 13: Seitenwände
- 14: Rückseitenbereich
- 15: Aussparung
- 35: Lichtaustrittsöffnung
- 16: Hinterschneidung
- 18: Schenkelfedern
- 20: Ausnehmung
- 21: Gehäusering
- 22: Lagerabschnitt
- 23: Kegelabschnitt
- 24: Aufweitung
- 25: Fixierring
- 26: Dicht- und/oder Klemmmittel
- 27: Griffmulden
- 28: Gegenlager
- 30: Leuchtmittel
- 35: Gehäuseöffnung
- 36: Platte
- 40: Kamera
- 41: Vorderseite
- 42: Abflachung
- 43: Rückseite
- 44: Kugelabschnitt
- 45: Blende
- 46: Schleuderscheibe
- 46: Laufspalt
- 48: Antriebseinheit
- 49: Anschlüsse
- 50: Bildsensor
- 50: Kameralinse
- 51: Endanschlag
- 70: Werkzeug
- 80: Anschluss
- 85: Fläche

- B: Tiefe
- D1: Durchmesser von 24
- D2: Durchmesser von 23
- D3: Durchmesser von 22
- D4: Durchmesser von 44
- D5: Durchmesser von 25
- D6: Durchmesser von 28
- H: Höhe
- L: Länge

## Patentansprüche

1. Leuchte (1), insbesondere Einbau- oder Aufbauleuchte für die Anordnung an einer Innenwandung (5) in einer Maschine, aufweisend:
- ein Gehäuse (10) mit einem Frontseitenbereich 12 und einem Rückseitenbereich (14),
- mindestens ein Leuchtmittel (30),
- mindestens eine Kamera (40),
- wobei im Frontseitenbereich (12) eine Lichtaustrittsöffnung (35) vorgesehen ist, durch die das von dem mindestens einen Leuchtmittel (30) emittierte Licht austreten kann, und
- wobei eine Ausnehmung (20) im Frontseitenbereich (12) vorgesehen ist, in die die Kamera (40) einsetzbar ist.

2. Leuchte (1) nach einem der vorgenannten Ansprüche,
**dadurch gekennzeichnet, dass** die Kamera (40) in der Ausnehmung (20) um einen Drehpunkt (P) verschwenkbar ist.

3. Leuchte (1) nach einem der vorgenannten Ansprüche,
**dadurch gekennzeichnet, dass** die Ausnehmung (20) das Gehäuse (10) durchbricht.

4. Leuchte (1) nach einem der Ansprüche 1 bis 3,
**dadurch gekennzeichnet, dass** das in der Lichtaustrittsöffnung (35) eine lichtdurchlässige Platte (36) angeordnet ist, und dass die Ausnehmung (20) die lichtdurchlässige Platte (36) durchbricht.

5. Leuchte (1) nach einem der vorgenannten Ansprüche,
**dadurch gekennzeichnet, dass** um die Ausnehmung (20) herum das mindestens eine Leuchtmittel (30) angeordnet ist.

6. Leuchte (1) nach einem der vorgenannten Ansprüche,
**dadurch gekennzeichnet, dass** in der Ausnehmung (20) ein Lagerabschnitt (22) ausgebildet ist..

7. Leuchte (1) nach einem der vorgenannten Ansprüche,
**dadurch gekennzeichnet, dass** die Ausnehmung (20) auf der dem Frontseitenbereich (12) zugewandten Seite eine Aufweitung (24) aufweist.

8. Leuchte (1) nach einem der vorgenannten Ansprüche,
**dadurch gekennzeichnet, dass** in die Ausnehmung (20) ein Fixierring (25) einsetzbar ist.

9. Leuchte (1) nach Anspruch 8,
**dadurch gekennzeichnet, dass** der Fixierring (25) in die Ausnehmung (20) einschraubbar ist, oder dass der Fixierring (25) durch einen Rastverschluss in der Ausnehmung (20) befestigbar ist.

10. Leuchte nach einem der Ansprüche 8 oder 9,
**dadurch gekennzeichnet, dass** der Fixierring (25) eine Werkzeugausnehmung (27) aufweist, in die ein Werkzeug zumindest bereichsweise einsetzbar ist.

11. Leuchte (1) nach einem der vorgenannten Ansprüche,
**dadurch gekennzeichnet, dass** in die Ausnehmung (20) ein Klemmmittel (26) einsetzbar ist, das die Kamera (40) in der Ausnehmung (20) verklemmen kann.

12. Leuchte (1) nach einem der vorgenannten Ansprüche,
**dadurch gekennzeichnet, dass** die Kamera (40) eine Vorderseite (41) mit einer lichtdurchlässigen Blende (45) aufweist.

13. Leuchte (1) nach Anspruch 12,
**dadurch gekennzeichnet, dass** die lichtdurchlässige Blende (45) eine angetriebene Drehscheibe ist.

14. Leuchte (1) nach Anspruch 12 oder 13,
**dadurch gekennzeichnet, dass** Mittel zur Erzeugung einer Sperrluft vorgesehen sind, die konfiguriert sind, einen Laufspalt (46) der lichtdurchlässigen Blende (45) mit der Sperrluft zu durchspülen.

15. Leuchte (1) nach einem der vorgenannten Ansprüche,
**dadurch gekennzeichnet, dass** die Kamera (40) abschnittsweise kugelförmig ausgebildet ist.

16. Leuchte (1) nach einem der vorgenannten Ansprüche,
**dadurch gekennzeichnet, dass** das mindestens eine Leuchtmittel (30) in der Kamera (40) benachbart zu einer Kameralinse (50) angeordnet ist.

17. Leuchte (1) nach einem der vorgenannten Ansprüche, **dadurch gekennzeichnet, dass** die Kamera (40) mindestens zwei Bildsensoren (50) aufweist, die zueinander beabstandet angeordnet sind.
